# EUROPÄISCHE PATENTSCHRIFT

(11) **EP 2 345 102 B1**
(45) Veröffentlichungstag und Bekanntmachung des Hinweises auf die Patenterteilung: **02.09.2015**
(21) Anmeldenummer: 09774624.2
(22) Anmeldetag: 12.11.2009
(51) Int. Cl.: H01Q 23/00, H04B 1/18, H04B 1/3805, H01Q 1/24

(54) **GPS-MASTMODUL SOWIE MOBILFUNKANLAGE**
GPS MAST MODULE AND MOBILE RADIO INSTALLATION
MODULE DE MÂT GPS ET INSTALLATION DE TÉLÉPHONIE MOBILE

(30) Priorität: 27.11.2008 DE 102008059333
(43) Veröffentlichungstag der Anmeldung: 20.07.2011
(73) Patentinhaber: Kathrein-Werke KG, 83022 Rosenheim (DE)
(72) Erfinder: BOSS, Michael, 83022 Rosenheim (DE); GABRIEL, Roland, 83556 Griesstätt (DE); SEEOR, Alexander, 83059 Kobermoor (DE)
(74) Vertreter: Flach, Dieter Rolf Paul
(86) Internationale Anmeldenummer: PCT/EP2009/008064
(87) Internationale Veröffentlichungsnummer: WO 2010/060542

(56) Entgegenhaltungen:
- EP-A1- 1 487 223
- EP-A2- 1 152 254
- WO-A1-03/056873
- WO-A1-2008/131697
- DE-A1- 4 310 256
- US-A1- 2007 063 911
- US-A1- 2008 055 172

## Beschreibung

Die Erfindung betrifft ein GPS-Mastmodul nach dem Oberbegriff des Anspruches 1 sowie eine Mobilfunkanlage mit einem derartigen GPS-Mastmodul nach Anspruch 13.

Mobilfunkanlagen umfassen bekanntermaßen eine Mobilfunk-Antenneneinrichtung und eine zugehörige Basisstation.

Mobilfunkantennen können in einem oder in mehreren Frequenzbändern strahlen und/oder empfangen, beispielsweise in einem 900 MHz-Band, in einem 1800 MHz-Band, in einem 1900 MHz-Band, oder z.B. in einem UMTS-Band, beispielsweise also in einem Bereich von ca. 1920 MHz bis 2170 MHz. Beschränkungen auf andere Frequenzbereiche liegen grundsätzlich nicht vor.

Bewährte Mobilfunkantennen arbeiten dabei mit Strahlern oder Strahlereinrichtungen, die beispielsweise in zwei senkrecht zueinander stehenden Polarisationen senden und/ oder empfangen können. Es wird insoweit häufig auch von einer X-Polarisation gesprochen, da die beiden Polarisationsebenen vom Grundsatz her in einem +45° Winkel bzw. einem -45° Winkel gegenüber der Horizontalebene oder Vertikalebene ausgerichtet sind. Unabhängig davon können die Mobilfunkantennen in ihrer Hauptstrahlrichtung in einem, von einer Horizontalausrichtung abweichenden Abstrahlwinkel eingestellt werden, der vorzugsweise fernsteuerbar in einem vorgegebenen Winkelbereich veränderbar ist. Es wird hier von einer fernsteuerbaren elektronischen Down-Tilt-Winkeleinstellung und einer zugehörigen Einstelleinrichtung gesprochen, die häufig kurz auch als RET-Einheit bezeichnet wird.

Ein derartiges Steuergerät ist beispielsweise aus der EP 1 356 539 B1 sowie ein zugehöriges Verfahren zum Betrieb einer derartigen RET-Einheit beispielsweise aus der EP 1 455 413 B1 als bekannt zu entnehmen.

Unabhängig von dem Aufbau der Antennenanlagen im Bereich einer Basisstation ist es erforderlich, dass die entsprechenden Antennenanlagen miteinander synchronisiert werden.

Gemäß den meisten Mobilfunkstandards wird die Synchronisation der Basisstation über ein Netzwerk- und Vermittlungssystem sichergestellt, welches auch als "Network and Switching System", kurz als "NSS" bezeichnet wird, welches zudem auch als Backbone-Netzwerk bekannt ist.

Satellitensignale sind hier nicht erforderlich, da die Synchronisation der Teilnehmer in dem jeweiligen Verbindungskanal erfolgt. Die grundlegenden Eigenschaften eines derartigen Mobilfunksystems sind beispielsweise in P. Jung: Analyse und Entwurf digitaler Mobilfunksysteme, Verlag Teubner, Stuttgart, 1997, S. 231-240 wiedergegeben.

Eine derartige Synchronisation wird dann komplexer, also schwieriger zu handhaben und problematischer, wenn mehrere Mobilfunkstationen einen Teilnehmer bedienen sollen, beispielsweise bei einem im UMTS-Netz erforderlichen Soft-Handover, bei Anwendung des Standards "Long-Term-Evolution" (LTE) etc.. Mit anderen Worten muss eine entsprechende Synchronisation zwischen zwei benachbarten Mobilfunk-Zellen erfolgen, wenn ein Teilnehmer eine Zelle verlässt und die nächste benachbarte Zelle betritt. Probleme kann dabei auch die Synchronisation des Umschaltzeitpunkts zwischen Senden und Empfangen zwischen mehreren Basisstationen aufweisen (TD-SCDMA). Insbesondere mit den neuen Standards, wie beispielsweise "Long-Term Evolution" (LTE) steigen die Anforderungen an die Synchronisation zwischen den verschiedenen Basisstationen erheblich. Zur Synchronisation für mehrere Mobilfunk-Basisstationen wird daher in modernen Verfahren auf Satellitensignale zur geostationären Positionsbestimmung zurück gegriffen, die nachfolgend unabhängig von dem jeweiligen Betreiber und/oder dem jeweiligen System kurz als GPS-, Satelliten- oder GPS-Satellitensignale bezeichnet werden. Dazu wird also ein separater GPS-Empfänger benötigt, welcher mit einer separaten Antenne die entsprechenden vom Satelliten ausgestrahlten Signale empfängt und das Signal der Basisstation oder Sendeeinheit zur Verfügung stellt.

Dabei erweist sich ferner als nachteilig, dass die Basisstation oft in abgeschirmten Räumen oder innerhalb von Gebäuden untergebracht ist, so dass auffällige Kabelverbindungen zu einer außen befindlichen GPS-Antenne gelegt werden müssen.

Das Vorhandensein von GPS-Antennen an Mobilfunkanlagen ist z.B. grundsätzlich aus der DE 20 2005 019 697 U1 zu entnehmen. Die GPS-Daten werden dabei über die GPS-Empfänger oder -Antennen empfangen und über separate Kabel dann zu einer Basisstation weitergeleitet.

Es könnte grundsätzlich auch daran gedacht werden, keine separaten GPS-Antennen vorzusehen (beispielsweise für die oben angesprochene Synchronisation zwischen mehreren Mobilfunkstationen), sondern die für den Mobilfunk-Betrieb vorgesehenen Strahlereinrichtungen zum Empfang der GPS-Signale selbst zu verwenden. Allerdings sind die in dem jeweiligen Mobilfunk-Frequenzbereich genutzten Antennen bzw. Strahler oder Strahlereinrichtungen, die zur Übertragung der Signale zu dem mobilen Teilnehmer benötigt werden, nicht zum Empfang des GPS-Signals optimal geeignet, da zum einen die Satellitensignale auf einem anderen Frequenzbereich übertragen werden und zum anderen die GPS-Signale beispielsweise zirkular polarisiert sind, wohingegen die für den Mobilfunkbereich vorgesehenen Antennen für den Empfang bzw. die Übertragung von linearen Polarisationen bestimmt oder geeignet sind. Zudem sind die Antennen bzw. Strahler einer Mobilfunk-Antenneneinrichtung vorwiegend auf den Boden ausgerichtet und nicht auf die Satellitenposition. Dies wäre beispielsweise nur dann der Fall, falls die Antenne für den GPS-Frequenzbereich mit ausgelegt ist und die vorhandenen Strahler (oder einem Teil davon) zu einer bevorzugt zirkularen Polarisation kombiniert werden würden.

Aber selbst dann, wenn die für eine Mobilfunk-Antenneneinrichtung vorgesehenen Antennen oder Strahler auch zum Empfang von Satellitensignalen im Allgemein oder GPS-Signalen im Besonderen verwendet werden sollten oder könnten, muss festgehalten werden, dass auf dem zwischen Basisstation und Antenneneinrichtung vorgesehenen Speisekabel (also der sogenannten HF-Hauptleitung) eine Reihe spektraler Störsignale vorhanden sind, welche das mit äußerst geringem Pegel vorhandene GPS-Signal stören würde. Obwohl sonst die Nutzung der am Mast befindlichen Antennen bzw. der dort aufgebauten Geräte zum Empfang eines Satellitensignales wünschenswert wäre, stößt dies somit auf eine Reihe von bisher nicht gelösten Problemen.

Im Automotive-Bereich oder im Zugfunk-Bereich sind beispielsweise Kombinationsantennen bekannt, wie z.B. die Kathrein-Antenne 8701011 sowie ein zugehöriger GPS-Verstärker gemäß der Produktnummer 86010142. Aufgrund der oben erläuterten Probleme und der geforderten hohen Entkopplung zwischen der GPS-Antenne und der Mobilfunkantenne (auch um den Empfangsverstärker für den GPS-Empfangszweig nicht zu übersteuern) werden das Signal der Mobilfunk-Antenneneinrichtung zum einen und die Signale der Satelliten- bzw. GPS-Antenne zum anderen auf getrennten Kabeln zwischen Empfängern und Sender übertragen. Mit anderen Worten ist auch hier für jeden Empfangszweig ein separates Kabel erforderlich.

Aus der US 2005/0272439 A1 ist eine Einrichtung zur Positionsbestimmung einer Mobilfunk-Antenneneinrichtung (GSM-Antenneneinrichtung) als bekannt zu entnehmen.

Bei dieser Mobilfunk-Antennenanlage ist die eigentliche Antenne über eine Hochfrequenz-Sende- und/oder Empfangssignalstrecke mit einer Empfangsschaltung und von dort mit einer Mobilfunkstation verbunden. Parallel dazu findet ein separater Datenaustausch außerhalb der HF-Übertragungsstrecke statt. Ferner ist auch eine GPS-Satelliten-Antenne vorgesehen, die über eine separate HF-Leitung mit einer Hauptfunktions-GPS-Schalteinheit verbunden ist, worüber wiederum ein separater Datenaustausch außerhalb der HF-Sende- und Empfangsstrecke (die zur Mobilfunkantenne führt) durchführbar ist.

Grundsätzlich ist eine Satellitenantenneneinrichtung auch aus der EP 1 924 029 A1 bekannt geworden. Die Antennenanlage umfasst dabei ein Antennenarray, wobei über die einzelnen Antennenelemente Positionssignale empfangen werden können, um die Orientierung der Mobilfunkantenne zu bestimmen und in Abhängigkeit davon zu justieren.

Aus der EP 1 487 223 A1 ist eine Mobilfunk-Antennenanlage mit einer Basisstation und einer zugehörigen Antenneneinrichtung als bekannt zu entnehmen. Für den Empfang sowie das Senden der Signale ist in der Basisstation eine Sendeeinheit und daneben eine Empfangseinheit vorgesehen. Über einen Antennen-seitig nachgeschalteten Basisstations-Sende-/Empfangsfilter wird eine Verbindung zur Antenneneinrichtung über eine HF-Hauptstrecke hergestellt. Hierbei werden die Sendesignale an die Antenneneinrichtung übermittelt sowie die von der Antenneneinrichtung empfangenen Signale an die Basisstation weitergeleitet.

Ferner ist die Basisstation mit einem hochgenauen GPS-Empfänger ausgestattet, der seine Satellitensignale direkt an die Basisstation weitergibt. Daneben ist auch noch ein kostengünstiger GPS-Sensor vorgesehen, der im Bereich der Antenne vorgesehen und montiert ist. Die von ihm empfangenen Satellitensignale werden über eine separate RAET-Datenleitung an die Basisstation übertragen.

In der EP 1 152 254 A2 ist ebenfalls eine Mobilfunk-Antenneneinrichtung mit einer GPS-Antenne beschrieben. Die Antennenanlage umfasst eine eigentliche, die Strahleinrichtung umfassende Antenneneinrichtung mit einem der Strahleinrichtung vorgelagerten Antennenduplexer. Diesem Antennenduplexer werden die Sendesignale direkt von einem Verstärker zugeführt. Die über die Antenneneinrichtung empfangenen Signale werden über den Antennenduplexer dann in einen zum Sendezweig parallelen Empfangszweig eingespeist, so dass zwei HF-Signal-Übertragungswege zur Verfügung stehen, nämlich einmal zur Übertragung der Sendesignale und zum anderen zur Übertragung der Empfangssignale.

Die von der GPS-Antenne empfangenen Satellitensignale werden lediglich in den Empfangszweig eingespeist, und zwar über einen sogenannten Signalweg-Selektor. Somit liegen in diesem Fall die GPS-Empfangssignale und das HF-Empfangssignal nicht gleichzeitig an, da der verwendete spezielle "Weg-Selektor" verwendet wird.

Aus der DE 43 10 256 A1 ist demgegenüber eine Antennen-Empfangsanlage mit einem Antennendiversity als bekannt zu entnehmen, also einem Antennensystem, wie es beispielsweise für Radioantennen bei Kraftfahrzeugen zum Einsatz kommt. In diesem Fall gibt es überhaupt keine Sendesignale mit einer höheren Leistung, die in Gegenrichtung zu den Empfangssignalen eingespeist und gesendet werden müssen. Es handelt sich lediglich um ein reines Antennen-Empfangssystem, bei welchem die Empfangssignale über einen Koppler so zusammengeschaltet werden, dass wahlweise eines der Signale die Dominanz erhält. Dabei ist nicht vorgesehen, dass jeweils ein anderes Antennensignal neben dem aktuell empfangenen ausgewertet wird, sondern dass es sich lediglich entsprechend dem Diversity-Empfangssystem um ein Umschaltsystem handelt, um jeweils zu dem besten und stärksten Empfangssignal umzuschalten.

Vor diesem Hintergrund ist es Aufgabe der vorliegenden Erfindung ein verbessertes GPS-Mastmodul, also ein verbessertes GPS-Mastgerät oder eine verbesserte GPS-Masteinheit insbesondere für eine Mobilfunkanlage sowie eine zugehörige Mobilfunkanlage mit einem derartigen GPS-Mastmodul zu schaffen, wodurch mit geringerem und überschaubarerem Aufwand die Auswertung von Satellitensignalen im Allgemeinen und GPS-Signalen im Besonderen verbessert werden kann.

Mit anderen Worten ist es Aufgabe der vorliegenden Erfindung, ein verbessertes Antennensystem mit einem GPS-Modul zu schaffen, bei welchem die im Stand der Technik auftretenden passiven Intermodulationen soweit als möglich verringert werden. Dabei soll im Rahmen der Erfindung zusätzlich sichergestellt sein, dass nicht nur passive Intermodulationen, sondern vor allem auch aktive Modulationen verringert werden, die im Stand der Technik dadurch entstehen und entstehen können, dass Teile der Sendesignale auch auf den nicht-linearen GPS-Verstärkerausgang gelangen, wo sie Intermodulationsprodukte erzeugen und in Richtung des Empfängers der Basisstation laufen.

Die Aufgabe wird erfindungsgemäß entsprechend dem GPS-Mastmodul gemäß den im Anspruch 1 und bezüglich der Mobilfunkanlage gemäß den im Anspruch 13 angegebenen Merkmalen gelöst. Vorteilhafte Ausgestaltungen der Erfindung sind in den Unteransprüchen angegeben.

Erfindungsgemäß ist dazu vorgesehen, dass die Satelliten- und/oder GPS-Signale nicht, wie im Stand der Technik, über ein separates Leitungsnetz zur Basisstation weiter geleitet werden, sondern dass die entsprechenden Satellitensignale über zumindest eine Hochfrequenz-Hauptleitung, also die zumindest eine zwischen der Basisstation und der Antenneneinrichtung verlaufende Hochfrequenz-Hauptleitung zur Basisstation übertragen werden.

Im Rahmen der Erfindung wird also nunmehr das von der Satelliten- oder GPS-Antenne erhaltene Signal über ein Koppelnetzwerk in die zumindest eine HF-Hauptleitung, die zwischen Basisstation und Mobilfunk-Antenneneinrichtung verläuft, eingespeist. Hierzu wird ein Richtkoppler verwendet, welcher eine Koppeldämpfung von mehr als 10 dB, bevorzugt von mehr als 20 dB aufweist.

Das Einspeisen eines sehr schwachen Satellitenempfangssignals in eine bereits anderweitig genutzte HF-Leitung mittels einer hohen Koppeldämpfung erscheint zunächst uneffektiv. Speziell bei einem Sende-Empfangs-Funksystem müssen jedoch die folgenden Nebenbedingungen mit beachtet werden, weshalb die erfindungsgemäße Lösung Vorteile aufweist:
- Geringer Frequenzabstand;
- Intermodulationen im Funksystem;
- Schwingneigung durch Rückkopplung (GPS-Verstärker);
- hoher Sende-Pegel im Funksystem; und
- GPS-Antenne nicht in optimaler Empfangsposition.

Wird, wie im Rahmen der Erfindung vorgeschlagen, ein Koppelnetzwerk in Form eines Richtkopplers verwendet, bietet dies den Vorteil, dass das verstärkte Satellitensignal auch mit einer losen Ankopplung in ein zwischen der Antenne und einer Basisstation verlaufendes koaxiales Speisekabel eingespeist werden kann, also in die zwischen Basisstation und Antenne verlaufende koaxial geschirmte HF-Hauptleitung.

Nachfolgend wird folglich von einem GPS-Signal gesprochen, wenn ein entsprechendes Satellitensignal gemeint ist. Bei dem GPS-Signal handelt es sich also um Global Positioning System, also um ein satellitengestütztes System zur weltweiten Positionsbestimmung. Eine Einschränkung auf ein bestimmtes derartiger bekannter oder zukünftiger Systeme ist hiermit nicht gemeint.

Die Einspeisung des Satellitensignals in die HF-Hauptleitung ist insbesondere dann besonders günstig möglich, wenn die Mobilfunkantenne in einem Frequenzbereich arbeitet, in welchem das verstärkte Satellitensignal (GPS-Signal) nicht oder nur mit hoher Dämpfung abgestrahlt wird. Damit werden aufwendige Filterstrukturen vermieden und das Signal bevorzugt in Richtung zur Basisstation eingespeist.

Abgesehen von der Einspeisung des Satellitensignals in die HF-Hauptleitung in der Orignalfrequenz-Lage der GPS-Antenne, ist es in einer alternativen Ausführungsform der Erfindung ebenso möglich, die erhaltenen Satelliten- und/ oder GPS-Signale mittels eines Mischers in eine andere Frequenz-Lage umzusetzen und in ein entsprechendes Koppelnetzwerk einzuspeisen.

Bevorzugt ist im Rahmen der Erfindung eine Satelliten-Antennen-Anschlusseinrichtung vorgesehen, die eine Satelliten- oder GPS-Antenne umfasst oder zumindest eine Schnittstelle zum Anschluss einer Satelliten- oder GPS-Antenne. Diese erwähnte Satelliten-Antennen-Anschlusseinrichtung kann bevorzugt zwischen einer koaxialen Schnittstelle der HF-Hauptleitung und einer weiteren Antennen-Schnittstelle angeschlossen werden. Die Satelliten- oder GPS-Antenne kann dabei als separate Baueinheit oder in einem anderen, in der Regel in der Nähe zur Satellitenantenne befindlichen Gerät integriert sein, beispielsweise einem rauscharmen Empfangsverstärker (TMA), der in der Regel Mobilfunkantennen-nah an einem Antennenmast montiert ist. Selbst eine Unterbringung in einer sogenannten RET-Einheit ist möglich, die, wie eingangs erwähnt, zur fernsteuerbaren Einstellung unterschiedlicher Abstrahlwinkel des Down-Tilt-Winkels vorgesehen sein kann.

Die Erfindung konkretisiert sich vor allem in dem beschriebenen Satelliten- oder GPS-Mastmodul, also einem Mastgerät oder einer Masteinheit, welche in der Regel antennennah an einer Bemastung oder anderen Befestigungseinrichtung montiert werden kann. Der Begriff "Mast" ist insoweit allgemein für jede Befestigungseinrichtung für jeden Anbringungsort zu verstehen. Dabei wird dieses GPS-Mastmodul bevorzugt antennennah, beispielsweise direkt unterhalb der eigentlichen Antenne oder Mobilfunkantenne an einem Mast angebracht, wo auch ein guter Satellitenempfang, also GPS-Satellitenempfang zu erwarten ist. In diesem Gerät können also alle wesentlichen Merkmale realisiert sein, so dass diese erfindungsgemäße Masteinheit nur über die beiden vorgesehenen Schnittstellen in einer koaxialen HF-Hauptleitung zwischengeschaltet werden muss.

Weitere Vorteile, Einzelheiten und Merkmale der Erfindung ergeben sich aus den anhand von Zeichnungen dargestellten Ausführungsbeispielen. Dabei zeigen im Einzelnen:
- Figur 1 :: eine schematische Darstellung einer erfindungsgemäßen Mobilfunkanlage mit einer Mobilfunk-Antenneneinrichtung, zusätzlichen Geräten mit GPS-Einrichtungen, einem Empfangsverstärker und einer Basisstation;
- Figur 2 :: eine schematische Schaltungsanordnung eines erfindungsgemäßen, in der HF-Zwischenstrecke zwischenschaltbaren GPS-Mastmoduls mit einer zusätzlich integrierten oder optional anschließbaren externen Satelliten-Antenne;
- Figur 3 :: ein zu Figur 2 abgewandeltes Ausführungsbeispiel unter Wiedergabe von zwei GPS-Antennen, die bezüglich zweier HF-Hauptstrecken in einem gemeinsamen Gerät untergebracht sind;
- Figur 4 :: eine gegenüber Figur 2 erweiterte Ausführungsform;
- Figur 5 :: eine zu Figur 1 abweichende schematische Darstellung einer gesamten erfindungsgemäßen Mobilfunkanlage und erfindungsgemäßen Aufbau;
- Figur 6 :: eine zu Figur 5 abweichende Darstellung zur Erläuterung, dass die zusätzliche, mit zumindest einer GPS-Antenne ausgestattete Geräteeinheit (GPS-Mastmodul) in der Mobilfunkantennenanordnung (innerhalb eines Radoms) untergebracht sein kann;
- Figur 7 :: eine zu Figur 6 abweichende Darstellung, bei der eine zusätzliche Geräteeinheit mit der zumindest einen Satelliten-Antenne in einen rauscharmen Empfangsverstärker TMA untergebracht ist; und
- Figur 8 :: eine nochmals abgewandelte Darstellung und Erläuterung, dass für jede HF-Hauptstrecke ein separates Gerätemodul mit zumindest einer Satelliten- oder GPS-Antenne in einem Remote Radio Head (RRH) untergebracht ist, wobei die Verbindung zur Basisstation über ein Glasfaserkabel hergestellt ist.

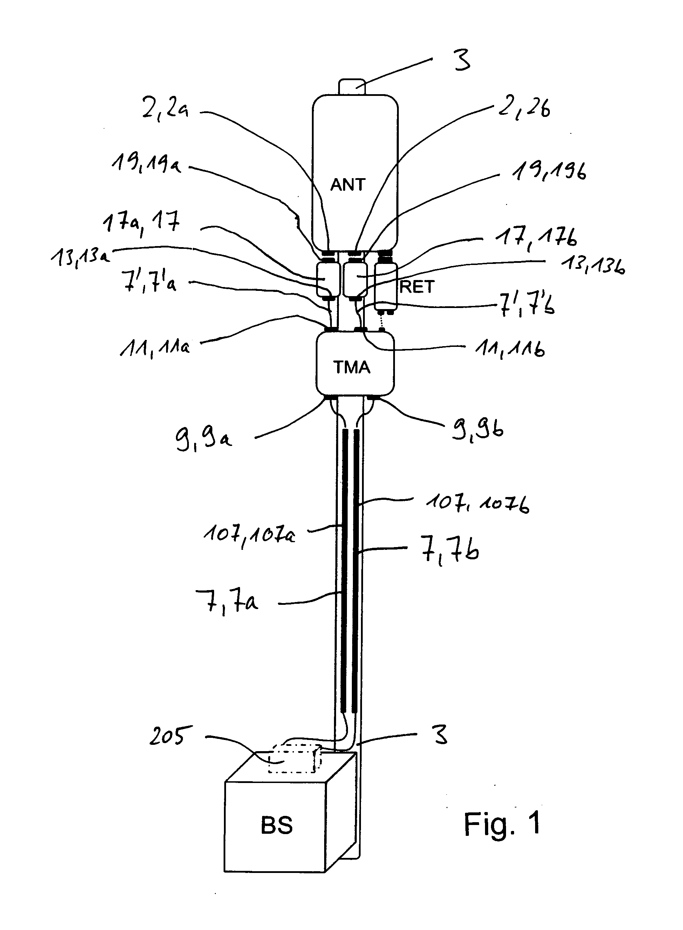

In Figur 1 ist ein grundsätzlicher Aufbau einer erfindungsgemäßen Mobilfunkantennenanlage gezeigt, und zwar mit einer Boden- oder gehäuseseitigen Basisstation BS, z.B. einem Antennenmast 3, einer oben am Antennenmast vorgesehenen Mobilfunk-Antenneneinrichtung ANT, in der Regel mit einer Vielzahl von Strahlern oder Strahlereinrichtungen, beispielsweise Dipolstrahlern, Kreuzdipolstrahlern, Dipolquadraten, sogenannten Vektordipolen, Patchantennen etc.. Einschränkungen bezüglich der Strahlertypen gibt es insoweit nicht. Es wird von daher auf die bekannten Strahler und Strahlereinrichtungen verwiesen, wie sie beispielsweise für Single- oder Dual-Band-Antennen oder sogar Multiband-Antennen bekannt sind. Bevorzugt werden Strahler und Strahlereinrichtungen verwendet, die in zwei senkrecht zueinander stehenden Polarisationen strahlen und/oder empfangen und dabei bevorzugt in einem ±45° Winkel über eine Horizontalebene und/oder Vertikalebene ausgerichtet sind.

Im gezeigten Ausführungsbeispiel handelt es sich dabei um eine in zwei Polarisationen strahlende Mobilfunkantennenanlage, weshalb zwei HF-Hauptleitungen 7, nämlich 7a und 7b von der Basisstation BS zur Antenneneinrichtung ANT führen. Diese HF-Hauptleitungen 7a und 7b sind dabei an einer elektrischen HF-Schnittstelle 9, im Konkreten an einer basisstationsseitigen, elektrischen HF-Schnittstelle 9a bzw. 9b an einem für beide Polarisationen vorgesehenen rauscharmen Empfangsverstärker TMA angeschlossen.

Der rauscharme Empfangsverstärker TMA ist antennenseitig ebenfalls mit zwei elektrischen HF-Schnittstellen 11, d.h. im Konkreten mit Schnittstellen 11a und 11b versehen, an denen HF-Zwischenleitungen 7', d.h. HF-Zwischenleitungen 7'a und 7'b angeschlossen sind, die zu den in Figur 1 gezeigten beiden GPS-Masteinheiten 17 (die im Folgenden teilweise auch als GPS-Mastmodule 17 bezeichnet werden), d.h. im Konkreten 17a bzw. 17b als für jede Polarisation getrennte Einheit führen. Dazu weist jede dieser beiden Einheiten 17 eine Schnittstelle 13, d.h. eine Schnittstelle 13a bzw. 13b auf, die den basisstationseitigen Anschluss bilden. An dem dazu gegenüberliegenden antennenseitigen Anschluss sind die beiden Einheiten 17a und 17b jeweils mit einer weiteren Schnittstelle 19, d.h. 19a bzw. 19b ausgestattet, die auch gleichzeitig eine Anschluss-Schnittstelle zu der Mobilfunk-Antenneneinrichtung ANT darstellen kann, so dass hier keine weitere separate Zwischenleitung vorgesehen ist. Im gezeigten Ausführungsbeispiel gemäß Figur 1 sind die GPS-Mastmodule oder Masteinheiten 17 beispielsweise an ihren Schnittstellen 19 direkt über Verbinder mit entsprechenden koaxialen Anschlussstellen oder Schnittstellen 2, d.h. 2a bzw. 2b mit der Antenneneinrichtung ANT verbunden und daran angeschlossen.

Dadurch werden zwischen der Basisstation BS und den in der Antenneneinrichtung ANT (üblicherweise unter einem Radom) vorgesehenen Strahlern zwei HF-Strecken 107, d.h. im gezeigten Ausführungsbeispiel eine HF-Strecke 107a für die erste Polarisation und eine weitere HF-Strecke 107b für die zweite dazu senkrecht stehende Polarisation gebildet, die die HF-Hauptleitungen 7a und 7b sowie die HF-Zwischenleitungen 7'a und 7'b und die beiden in dem rauscharmen Empfangsverstärker TMA vorgesehenen integrierten Verstärkungsstrecken bzw. Verstärkungsstufen sowie die beiden in Figur 1 gezeigten GPS-Masteinheiten oder GPS-Mastmodule 17a und 17b mit der integrierten Signalstrecke umfassen.

Die jeweiligen GPS-Masteinheiten oder GPS-Mastmodule 17a, 17b sollen dabei eine Satelliten-Antenne, im Konkreten eine auch als GPS-Antenne bezeichnete Antenneneinrichtung umfassen oder zumindest eine weitere Schnittstelle, an der eine externe Satelliten-Antenne oder GPS-Antenne anschließbar ist.

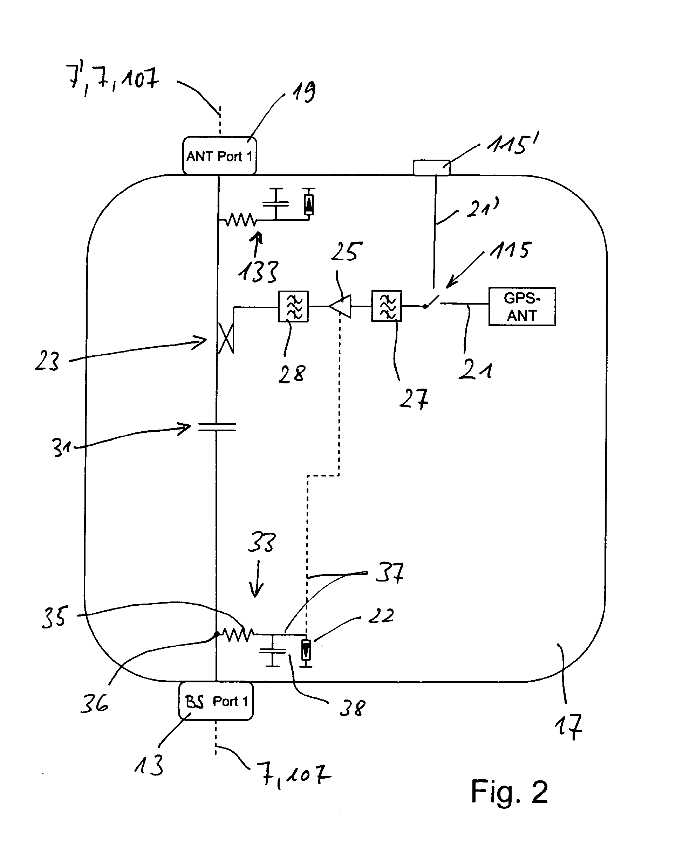

In Figur 2 soll dabei in schematischer Darstellung der weitere Aufbau erläutert werden.

In Figur 2 ist nunmehr eine erste Ausführungsform einer erfindungsgemäßen Satelliten- oder GPS-Masteinheit 17 dargestellt, die zwischen einer Basisstation BS und einer Antenneneinrichtung ANT zuschaltbar ist. Bevorzugt wird diese Einheit antennennah an einem Mast oder einer anderen Befestigungseinrichtung montiert. Dazu ist in Figur 2 der basisstationsseitige Anschluss BS Port1 gezeigt, der die basisstationsseitige Schnittsteile mit dem basisstationsseitigen Anschluss 13 des Satelliten- oder GPS-Mastmoduls 17 darstellt. Ebenso ist zu ersehen, der antennenseitige Anschluss ANT Port1, der die antennenseitige Schnittstelle oder den antennenseitigen Anschluss 19 wiedergibt. Diese beiden Anschlüsse 13 und 19 sind also in der HF-Hauptstrecke 107 zwischengeschaltet, also in der HF-Hauptleitung 7. Dabei ist in Figur 2 nur eine der beiden HF-Hauptstrecken 107 dargestellt, da der weitere Aufbau bezüglich des erläuterten Ausführungsbeispiels sowohl für die HF-Hauptstrecke 107a als auch für die HF-Hauptstrecke 107b gleich aufgebaut ist. Dabei ist bei der schematischen Darstellung gemäß Figur 2 in der HF-Hauptstrecke 107, die die erwähnte HF-Hauptleitung 7 umfasst, der in Figur 1 gezeigte rauscharme Empfangsverstärker TMA ebenfalls der Einfachheit halber nicht wiedergegeben, sondern nur eine der beiden, im Folgenden weiter erörterten Satelliten-Mastmodule 17.

Aus der schematischen Darstellung gemäß Figur 2 ist zu ersehen, dass in diesem Falle in der Einrichtung 17 eine Satelliten-Antenne untergebracht ist, die nachfolgend kurz als GPS-ANT bezeichnet wird.

Diese GPS-Antenne ist über eine Satelliten-Antennenleitung 21 mit einem Richtkoppler 23 verbunden, und zwar unter Zwischenschaltung eines GPS-Empfangsverstärker 25. Ferner ist auf der Strecke zwischen der Satelliten-Antenne GPS-ANT und dem Richtkoppler 23 eine dem Satellitenverstärker 25 vorgeschaltete, eingangsseitige Frequenz-Selektions-Einrichtung 27 und eine zu diesem Verstärker nachgeschaltete, ausgangsseitige Frequenz-Selektions-Einrichtung 28 vorgesehen, die dann mit dem erwähnten Richtkoppler 23 verbunden ist.

Durch diesen strukturellen Aufbau ist es möglich, dass das Satelliten- oder GPS-Signal in die Satelliten-Antennenleitung 21 eingespeist wird. Nach einer Vorfilterung durch die Frequenz-Selektionseinrichtung 27 wird das GPS-Signal mittels des GPS-Empfangsverstärkers 25 um zumindest 6 dB, vorzugsweise um 10 dB und insbesondere um vorzugsweise zumindest 20 dB verstärkt. Die Einspeisung in die HF-Hauptstrecke 107 erfolgt dann über den erwähnten Richtkoppler 23 unter Berücksichtigung des den GPS-Empfangsverstärker 25 nachgeschalteten, ausgangsseitigen Frequenz-Selektionsfilter 28. Dadurch wird erreicht, dass der GPS-Empfangsverstärker 25 einerseits nicht durch Fremdsignale gestört wird. Andererseits wird auch erreicht, dass das HF-Sendesignal, welches auf der HF-Hauptleitung 7 bzw. der HF-Hauptstrecke 107 von der Basisstation BS kommend übertragen wird, am Ausgang des Verstärkers 25 keine unerwünschten Intermodulationen erzeugt.

Die zum GPS-Empfangsverstärker 25 eingangsseitig vorgesehene Frequenz-Selektions-Einrichtung 27, mit anderen Worten das hier vorgesehene Filter, kann je nach Mobilfunksystem aus einem Bandpass, einem Tiefpass, einem Hochpass oder einer Bandsperre oder Kombination hieraus bestehen. Hierdurch soll insbesondere sicher gestellt werden, dass der GPS-Empfangsverstärker 25 beispielsweise durch die Mobilfunksendesignale nicht übersteuert wird. Des weiteren wird im Ausgang des GPS-Empfangsverstärkers ein Bandpass- oder Sperrfilter eingesetzt, um außerhalb des Nutzfrequenzbandes des Satellitensignals spektrale Störer zu unterdrücken. Insbesondere wird dadurch das Sendesignal der Basisstation unterdrückt. Ebenfalls unterdrückt werden von benachbarten Basisstationen oder Mobilteilnehmern empfangene Störsignale.

Der Satelliten- oder GPS-Verstärker 25 besteht bevorzugt aus einem übersteuerungs-festen Verstärker, welcher an seinem Eingang den erwähnten Filter 27 vorgeschaltet aufweist, da durch die unmittelbare räumliche Nähe der Satelliten- oder GPS-Antenne GPS-ANT zur Sendeantenne (Mobilfunk-Antenneneinrichtung ANT) trotz des Eingangsfilters 27 noch ein erheblicher Störpegel auftreten kann.

Wie aus der schematischen Darstellung aus Figur 2 auch zu ersehen ist, ist in der HF-Hauptstrecke 107 üblicherweise noch ein Kondensator 31 zwischengeschaltet, nämlich in der Satelliten-Masteinheit 17, wobei die Auskoppelstrecke des Richtkopplers 23 zwischen dem Kondensator 31 und der Antenneneinrichtung ANT, also zwischen dem Kondensator 31 und dem antennenseitigen Port1, also dem Anschluss oder der Schnittstelle 19 vorgesehen ist, um die Gleichspannung von der Antenne zu entkoppeln. Sofern für die Antenne eine Gleichspannung erforderlich ist, kann dieser Kondensator auch entfallen, sofern nicht eine andere Gleichstrom-Einspeisung auf der dem Kondensator 31 zur Antenne ANT führenden Strecke separat vorgesehen ist, wie dies in einem nachfolgend noch erläuterten Ausführungsbeispiel noch realisiert wird.

Bei Verwendung eines Richtkopplers 23 ist zusätzlich auch noch eine Auskopplung für die Gleichspannung vorgesehen, die über die HF-Hauptstrecke 107 von der Basisstation BS kommend mit zur elektrischen Energieversorgung der zusätzlichen Komponenten einschließlich des GPS-Empfangsverstärkers 25 benötigt wird.

Dazu ist in Figur 2 in der HF-Hauptleitung 7 ein Bias-Tee in Form eines Diplexers 33 vorgesehen, der die von der Basisstation über die HF-Hauptleitung 7 (HF-Hauptstrecke 107) kommende Hochfrequenz HF über den Kondensator 31 zur der Mobilfunk-Antenneneinrichtung ANT auskoppelt, wohingegen die über die HF-Hauptleitung 7 von der Basisstation kommende Versorgungsspannung und/oder niederfrequente Daten-Signale über eine Induktivität 35 abgeführt werden. Da in der Zweigleitung 37 noch ein Kondensator 38 der Spule 35 nachgeschaltet ist, wirkt die Reihenschaltung aus Spule und Kondensator noch als Tiefpass, mit dem die Hochfrequenz HF zusätzlich von der niederfrequenten Auskopplung getrennt wird. Ferner ist noch ein Überspannungsschutz 22 vorgesehen, der zwischen der Versorgungsleitung 37 (Mast) ebenso wie der parallel dazu vorgesehene Kondensator 38 geschaltet ist.

Somit kann also die Versorgungsspannung (Gleichstrom) oder können die niederfrequenten Signale, Datensignale oder Steuersignale über den erwähnten Diplexer 33 (Bias Tee) an einem Knotenpunkt 36 in eine davon ausgehende NF- und/oder Versorgungsleitung 37 eingespeist werden, die dann beispielsweise zum Betrieb des GPS-Empfangsverstärkers 25 zugeführt werden.

Gemäß Figur 2 ist dieser Aufbau insoweit symmetrisch, als ein weiteres Bias-Tee (Diplexer 133) auf der Anschlussseite zur Mobilfunkantenne ANT einschließlich des oben erwähnten Überspannungsschutzes 22 vorgesehen ist. Diese Schaltung 133 dient als Blitzschutz-Überspannungsschaltung und umfasst ähnlich der Diplexerschaltung 33 einen entsprechenden Aufbau mit einer Induktivität bei einem Kondensator und einer Überspannungsschutz-Schaltung.

In Figur 2 ist ein optionaler Satelliten-Anschlussschalter 115 im GPS-Mastmodul 17 vorgesehen, der einen externen Anschluss 115' unter Berücksichtigung des Eingangsfilters 27 zum Satellitenempfänger 25 schaltet. Dies eröffnet die Möglichkeit, anstelle einer integrierten Satelliten- oder GPS-Antenne GPS-ANT eine externe Satelliten-Antenne an der Satelliten-Antennen-Anschlusseinrichtung 17 anzuschließen, die dann über die Verbindungsleitung 21' und den Schalter 115 die Verbindung über die Filter 27, Empfangsverstärker 25, nachgeschalteten Filter 28 und Richtkoppler 23 zur HF-Hauptstrecke 7 herstellt, und die GPS- oder Satellitensignale zur Basisstation in die HF-Hauptstrecke 7 mit einer losen Kopplung unter Vermeidung von auftretenden Intermodulationen einzuspeisen.

Wird im Rahmen des vorstehend erläuterten Aufbaus ein sorgfältig abgestimmtes Pegeldiagramm eingestellt, welches durch die Verstärkung des Satelliten- oder GPS-Verstärkers 25, die Einkopplung in das Speise- bzw. Steuerkabel 7 durch ein an der Basisstation (BS) bevorzugt vorgesehenes Sperrfilter 205 (beispielsweise in Form eines Stoppbandfilters), ein dem Empfangsverstärker 25 vorgeschaltetes Filter 27 sowie ein diesem Empfangsverstärker 25 nachgeschaltetes Filter 28 beeinflusst ist, kann die Mast-Position direkt zum Empfang eines GPS-Signals genutzt werden. Dies ist allerdings nur im Rahmen der erfindungsgemäßen Gestaltung der Verstärkeranordnung des Satelliten- bzw. GPS-Verstärkers, vorzugsweise mit den erwähnten Eingangs- und Ausgangsfiltern 27, 28 und der bevorzugt losen Kopplung in das als HF-Hauptkabel bezeichnete geschirmte Koaxialkabel unter Verwendung eines Richtkopplers 23 möglich.

Die Verstärkung soll dabei mindestens 6 dB größer sein als die Koppeldämpfung des Koppelnetzwerkes. Ein mit dem Satelliten- oder GPS-Verstärker 25 nachgeschaltetes Filter 28 verhindert einerseits die Störung des Verstärkers und stellt anderseits sicher, dass kein passives Intermodulationsprodukt entsteht, welches auf das Speisekabel 7 zurückwirken könnte. Daher ist auch die relativ lose Ankopplung des Verstärkerausganges erforderlich. Die GPS-Antenne GPS-ANT bzw. der zugehörige GPS-Empfänger kann dabei beispielsweise in einem am Mast befindlichen Empfangsverstärker für das Mobilfunksystem integriert werden (MHA oder TMA).

Die lose Ankopplung in das koaxiale Speisekabel, d.h. in die HF-Hauptleitung 7 zwischen dem rauscharmen Empfangsverstärker TMA und der Basisstation bzw. in die koaxiale HF-Hauptstrecke 107 zwischen Antenne und Basisstation wird durch eine Ankopplung mittels des erwähnten Richtkopplers durchgeführt werden, der bevorzugt eine Koppeldämpfung von mehr als 10 dB, bevorzugt von mehr als 20 dB aufweist.

Vor allem aber ist, wie erwähnt, die Satelliten- oder GPS-Antenne bevorzugt in einem separaten Gerät, beispielsweise in der Satelliten-Antennen-Anschlusseinrichtung 17 integriert vorgesehen oder kann über eine dort ausgebildete Schnittstelle 115' direkt angeschlossen und gegebenenfalls sogar mechanisch angebaut werden.

Das vorstehend erläuterte Ausführungsbeispiel gemäß Figuren 1 und 2 betrifft eine Antennenanlage, insbesondere eine Mobilfunkanlage mit einer Mobilfunk-Antenneneinrichtung ANT, die Strahler oder Strahlereinrichtungen umfasst, die in zwei senkrecht zueinander stehenden Polarisationsebenen strahlen, wobei an den beiden eingangsseitigen Schnittstellen 19a, 19b der Antenneneinrichtung ANT jeweils eine separate Satelliten-Antennen-Anschlusseinrichtung 17, d.h. 17a bzw. 17b mit einer separaten integrierten oder anschließbaren GPS-Antenne GPS-ANT vorgesehen war.

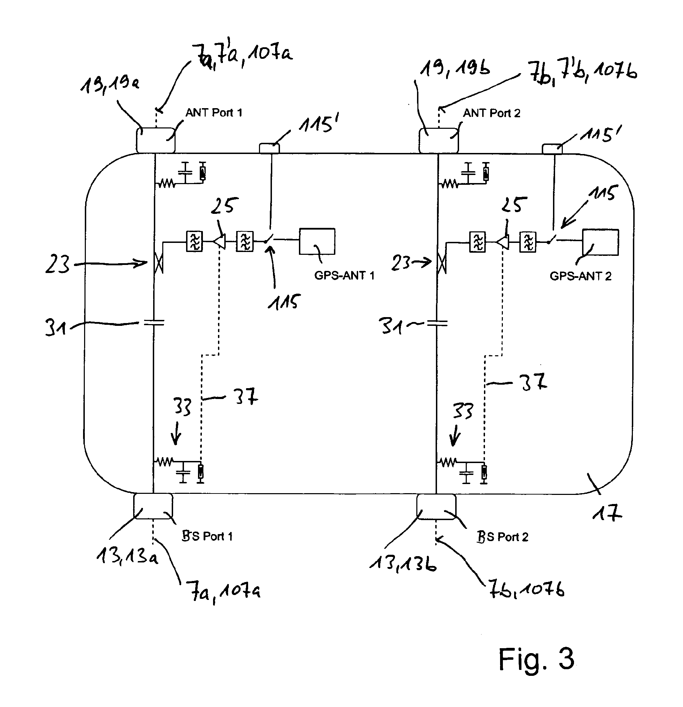

Anhand von Figur 3 ist gezeigt, dass der Aufbau unter Verwendung einer Doppeleinheit für die in Figuren 1 und 2 getrennt vorgesehenen beiden Satelliten-Antennen-Anschlusseinrichtungen 17a und 17b für den direkten Anschluss an einer X-polarisierten Antenne realisiert sein kann, also eine Mobilfunk-Antenneneinrichtung ANT mit Strahlern und Strahlereinrichtungen oder Strahlereinrichtungsgruppen, die beispielsweise am ±45° Winkel zur horizontalen und/ oder vertikalen Ebene strahlen oder ausgerichtet sind. Gleiche Bauteile sind insoweit mit gleichen Bezugszeichen versehen, jeweils durch den Buchstaben "a" für die eine Polarisationsebene bzw. -komponente und mit dem Buchstaben "b" für die zweite Polarisationsebene oder -komponente erweitert. Bei jeder Polarisation ist dabei eine GPS-Antenne GPS-ANT1 bzw. GPS-ANT2 vorgesehen, die jeweils über einen ihr zugeordneten Schalter 115 zu- oder abgeschaltet werden kann, wenn auf eine extern angeschlossene weitere GPS-Antenne umgeschaltet werden soll, die an einer der beiden vorgesehenen Anschlussstellen 115' angeschlossen ist.

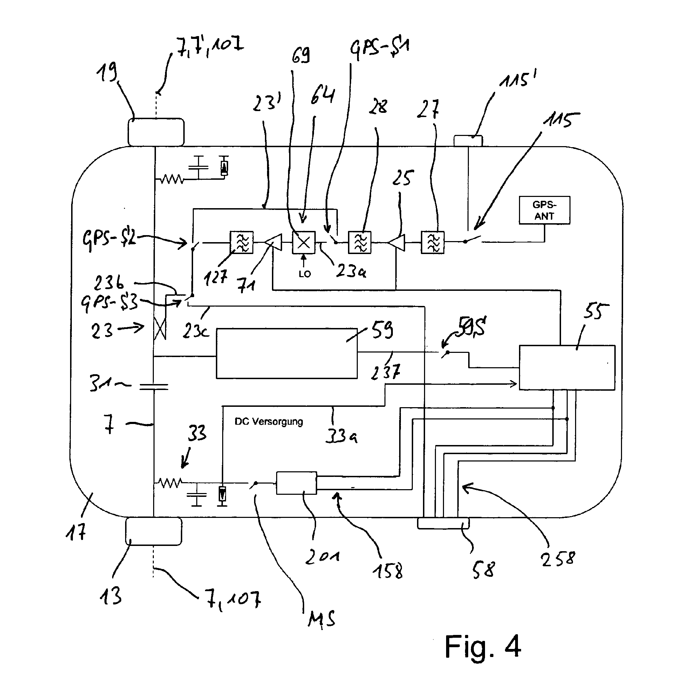

Nachfolgend wird auf ein weiteres abgewandeltes Ausführungsbeispiel anhand von Figur 4 eingegangen, welches vom Grundsatz her wiederum einen Aufbau zeigt, wie er in ähnlicher Weise auch anhand von Figur 2 für ein GPS-Mastmodul 17, als eine GPS-Masteinheit 17 gezeigt ist. Die Ausführungsvariante gemäß Figur 4 umfasst dabei noch weitere zusätzliche Elemente und Varianten, auf die nachfolgend eingegangen werden soll.

Figur 4 zeigt ferner eine Frequenz-Umsetzungs-Stufe 64, mit einer eingangsseitigen Frequenz-Selektions-Einrichtung 27 (beispielsweise in Form eines Bandpassfilters), den erwähnten nachfolgenden GPS-Empfangsverstärker 25 und die ausgangsseite Frequenz-Selektions-Einrichtung 28 in Form einer weiteren Filterstufe (ebenfalls beispielsweise in Form eines Bandpassfilters), wie dies anhand von Figur 2 erläutert wurde.

Ferner ist in dem Ausführungsbeispiel gemäß Figur 4 gezeigt, dass wie bei der Variante gemäß Figur 2 durch entsprechende Umschaltung eines GPS-Antennen-Schalters 115 in dem GPS-Mastmodul 17 (also der GPS-Masteinheit 17) zwischen der internen GPS-Antenne GPS-ANT oder einer extern anschließbaren GPS-Antenne durch entsprechende Umschaltung ausgewählt werden kann, wobei die externer GPS-Antenne an dem Anschluss oder der Schnittstelle 115' an dem Gehäuse der GPS-Masteinheit 17 angeschlossen werden kann.

Ferner sind bei der Ausführungsvariante gemäß Figur 4 weitere Schalter oder Umschalter vorgesehen, nämlich ein Schalter GPS-S1 und ein weiterer Schalter GPS-S2. Durch entsprechende Umschaltung dieses zuletzt genannten Schalterpaares kann über eine Parallel- oder Koppelleitung 23' das betreffende GPS-Signal, wie anhand von Figur 2 erläutert, in die HF-Hauptstrecke 7 eingespeist werden, und zwar über den Richtkoppler 23. Werden beide zuletzt erwähnten Schalter GPS-S1 und GPS-S2 umgelegt, so erfolgt eine weitere Verarbeitung des GPS-Signales über einen Mischer und eine weitere Verstärkerstufe.

Über die erwähnten Umschalter GPS-S1 und GPS-S 2 kann also eine Verbindung hergestellt werden über die erwähnte Koppelleitung 23' zu dem erwähnten Richtkoppler 23 (RIKO), die bei dem Ausführungsbeispiel nach Figuren 2 oder 3 eine entsprechende Einkopplung des verstärkten Satellitensignals in die betreffende HF-Hauptleitung 7 (HF-Hauptstrecke 107) ermöglicht.

Durch entsprechende Umlegung der Schalter GPS-S1 und GPS-S2 in die andere Schaltstellung (wobei alle gezeigten Schalter beispielsweise durch eine in der Schaltung gemäß Figur 4 vorgesehene Auswerte- und/oder Kontrollelektronik 55 ansteuerbar sind) wird dann über eine wirksame Zwischenleitung 23a eine Verbindung von dem GPS-Verstärker 25 über die nachgeordnete Filterstufe 28 zu dem in Figur 4 gezeigten Mischer 69 hergestellt werden, der mittels eines nicht weiter dargestellten Lokaloszillators LO angesteuert wird. In Abhängigkeit der betreffenden Lokaloszillatorfrequenz wird dann mittels des Mischers 69 das verstärkte GPS-Antennensignal in ein abweichendes Frequenzband umgesetzt, vor allem in ein zu dem Hochfrequenzbereich, wie er in der HF-Hauptleitung bzw. HF-Hauptstrecke übertragen wird, abweichendes Frequenzband. Über eine in Figur 4 gezeigte nochmals nachfolgende Verstärkerstufe 71 und eine weitere nachgeschaltete Frequenz-Selektions-Einrichtung 127 (beispielsweise in Form eines geeigneten Filters) erfolgt dann ebenfalls wiederum über ein nachfolgendes Schalterpaar GPS-S2 und GPS-S3 eine Verbindung über eine Zwischenleitung 23b zum Richtkoppler 23 ober über eine alternative Zwischenleitung 23c z.B. zu einer AISG-Schnittstelle 58 und von dort über eine angeschlossene Busstruktur zur Basisstation BS.

Mittels der erwähnten Schalter 115 bzw. GPS-S1 und GPS-S2 ergeben sich eine Vielzahl unterschiedlicher Schaltmöglichkeiten, die sinngemäß wie folgt zusammengefasst werden können:
- Das empfangene GPS-Signal kann in der Originalfrequenzlage über den Richtkoppler 23 in die HF-Hauptstrecke 7 eingespeist werden.
- Das empfangene GPS-Signal kann in der Originalfrequenzlage über eine externe weitere Schnittstelle übertragen werden. Dazu ist in Figur 4 noch ein weiterer Schalter GPS-S3 angedeutet, der so umschaltbar ist, dass am Ausgang der Frequenz-Umsetz-Stufe eine Verbindung nicht zum Richtkoppler 23, sondern über eine Zwischenleitung 23c zu einer separaten Schnittstelle 58 hergestellt wird.
- Das empfangene GPS-Signal kann ebenso aber mittels der erwähnten Frequenz-Umsetzung über den Richtkoppler 23 in die HF-Hauptstrecke 7 eingespeist werden.
- Ebenso kann das GPS-Signal nach der Frequenz-Umsetzung aber auch über die oben erwähnte externe Schnittstelle 58 nach entsprechender Umschaltung des weiteren Schalters GPS-S3 übertragen werden.

Der Aufbau gemäß Figur 4 eröffnet dabei ferner die Möglichkeit, dass die Gleichstromversorgung für die entsprechenden elektronischen Komponenten, wie umfassend beschrieben, von der Basisstation kommend über die HF-Hauptstrecke 7 eingespeist und über die beschriebene Bias-Tee-Schaltung 33 aus der HF-Hauptstrecke 7 ausgekoppelt wird. Möglich ist aber ebenso, dass die Gleichstromversorgung für das GPS-Mastmodul 17 über die erwähnte externe Schnittstelle 58 zur Verfügung gestellt wird.

Schließlich zeigt Figur 4 auch noch eine weitere Gleichstrom(DC)-Versorgungs- und/oder Steuerungsschaltung 59, die beispielsweise über eine, über einen Schalter 59S zuschaltbare Leitung 237 mit der Auswerte-Kontrollelektronik 55 in Verbindung steht, die wiederum über die zusätzliche Schnittstelle 58 ebenfalls mit Gleichstrom versorgt werden kann. Über diese (DC)-Versorgungs- und/ oder Steuerungsschaltung 59 kann zudem eine entsprechende Gleichspannung, d.h. Gleichstrom in den antennenseitigen Zweig der HF-Hauptstrecke 7 eingespeist werden, also in den Abschnitt zwischen dem anhand von Figur 2 bereits beschriebenen und in Figur 4 ebenfalls gezeigten Kondensator 31 und dem antennenseitigen Anschluss oder Port 19. Dadurch können also zwischen diesem Kondensator 31 und der Antenne ANT zusätzlich zugeschaltete Geräte mit Gleichstrom versorgt werden.

Schließlich ist eine Überwachung oder eine Steuerung des GPS-Mastmoduls sowie eine Überwachung oder Steuerung von zusätzlichen Geräte zwischen dem GPS-Mastmodul und der Antenne durchführbar und möglich, und zwar zum einen über HF-Hauptstrecke 7 und das in Figur 4 gezeigte Modem 201, und/oder über die erwähnte externe Schnittstelle 58.

Das Modem ist dabei beispielsweise zur HF-Hauptstrecke hin über die Bias-Tee-Schaltung 33 und einen umlegbaren Schalter MS zu- oder abschaltbar. Auf der gegenüberliegenden Seite ist das Modem 201 über einen Signalbus 158 mit einer Busstrecke 258 verbunden, die wiederum zwischen der weiteren Schnittstelle 58 und der Auswerte-/Kontrollelektronik 55 verläuft (die im übrigen auch die Gleichspannung für den GPS-Empfangsverstärker 25 sowie den weiterne Verstärker 71 der Frequenzumsetzungsstufe zur Verfügung stellt). Im übrigen ist auch eine Gleichstromversorgung über die HF-Hauptstrecke 7 und die Bias-Tee-Stufe 33 und die in Figur 4 gezeigte Gleichstrom-Versorgungsleitung 33a bezüglich der nachgeschalteten Auswerte-/Kontrollelektronik 55 möglich, wenn diese Einheit keine Gleichspannung über die separate Schnittstelle 58 erhält.

Bei der Schnittstelle 58 kann es sich beispielsweise um eine AISG-Schnittstelle handeln. Möglich ist auch, dass diese Schnittstelle aus einer anderen vergleichbaren Schnittstelle besteht, über die auch ein anderes Protokoll zur Steuerung der Antenne aber auch zur Steuerung des GPS-Mastmoduls übertragen werden kann. Hierfür kann also ein entsprechender Signalbus 258 zwischen der erwähnten Schnittstelle 58 und beispielsweise der Auswerte-Kontrollelektronik 55 vorgesehen sein.

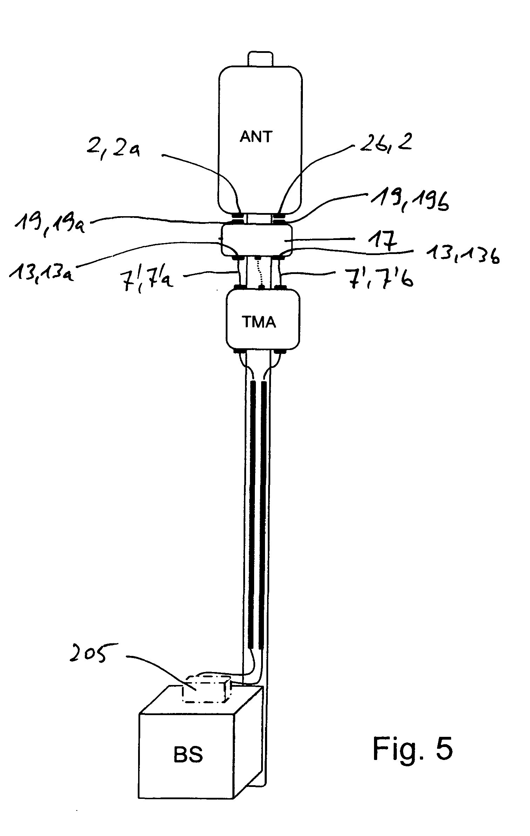

Die anhand der Figuren 2 bis 4 gezeigten Ausführungsbeispiele könnten beispielsweise bei einer Mobilfunkanlage realisiert werden, wie dies vereinfacht anhand von Figur 5 gezeigt ist. Dort ist das für die beiden Polarisationen als Doppeleinheit (Figur 3) vorgesehene GPS-Mastmodul 17 zwischen dem rauscharmen Empfangsverstärker TMA für die beiden Polarisationen und der Mobilfunk-Antenneneinrichtung ANT zwischengeschaltet, wobei diese Einheit 17 direkt mit ihren beiden antennenseitigen Anschlüssen 19, 19a, 19b an entsprechenden Anschlüssen oder Schnittstellen 2a, 2b der Mobilfunk-Antenneneinrichtung ANT direkt angeschlossen ist und Verbindungsleitungen 7', d.h. 7'a und 7'b zwischen dem rauscharmen Empfangsverstärker TMA und den zugeordneten Anschlüssen bzw. Schnittstellen 13a, 13b an der GPS-Masteinheit 17 vorgesehen sind.

In Figur 5 ist ähnlich wie in Figur 1 auch noch ein basisstationsseitiger Sperrfilter 205 eingezeichnet, der an oder in der Basisstation BS vorgesehen sein kann. Dieser Filter ist bevorzugt als Stoppbandfilter 205 ausgebildet, insbesondere um den Frequenzbereich des von der Satelliten-Antenne GPS-ANT übertragenen Satellitensignals von Störspektren frei zu halten. Von daher führen die HF-Hauptleitungen 7a, 7b, also die HF-Hauptstrecken 107a, 107b von der Basisstation ausgehend über dieses bzw. durch dieses Filter 205.

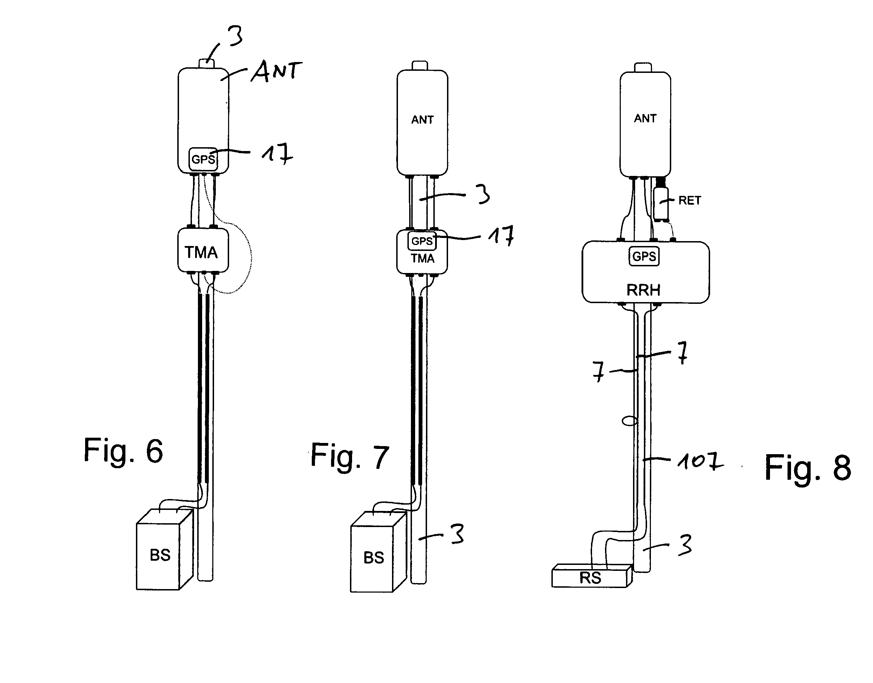

Anhand von Figur 6 ist lediglich gezeigt, dass die Satelliten-Antennen-Anschlusseinrichtung 17 auch in der Mobilfunk-Antenneneinrichtung ANT, in der Regel unterhalb des Radoms mit integriert sein kann.

Bei der Variante gemäß Figur 7 ist gezeigt, dass die selbe Einrichtung 17 in dem der Mobilfunk-Antenneneinrichtung ANT vorgeschalteten, rauscharmen Empfangsverstärker TMA integriert ist.

Bei der Variante gemäß Figur 8 ist gezeigt, dass hier eine Single-Satelliten-Antennen-Anschlusseinrichtung 17 vorgesehen ist. Dabei handelt es sich um eine Mobilfunkanlage, bei der für die HF-Hauptleitungen 7 keine Koaxialleitung, sondern eine Glasfaserleitung verwendet wird, was in diesem Fall eine separate Gleichstrom-Versorgungsleitung 107 von der Basisstation RS kommend zu der im oberen Bereich des Mastes vorgesehen Einheit RRH führt und dort über einen separaten Anschluss eingespeist wird. Ferner zeigt das Ausführungsbeispiel gemäß Figuren 1 und 8, dass an der Mobilfunk-Antenneneinrichtung ANT auch noch eine RET-Einheit angeschlossen ist, die zur ferngesteuerten elektronischen Einstellung des Abstrahlwinkels dient, worüber in bekannter Weise innerhalb der durch das Radom geschützten Innenraums der Mobilfunk-Antenneneinrichtung entsprechende Phasenschieber ansteuert und dadurch den Down-Tilt-Winkel einstellt.

## Patentansprüche

1. GPS-Mastmodul für eine Basis-Station oder ein Remote-Radio-Head mit folgenden Merkmalen:
- mit zumindest einer integriert vorgesehenen Satelliten-Antenne (GPS-ANT) und/oder einem Satelliten-Anschluss (115') zum Anschluss einer Satelliten-Antenne (GPS-ANT),
- das GPS-Mastmodul (17) umfasst zumindest zwei Anschlüsse (13, 19), nämlich einen Basis-Anschluss(13) und einen Mobilfunkantennen-Anschluss (19), zwischen denen eine HF-Mobilfunk-Hauptstrecke (7, 107) sowohl zur Übertragung von HF-Sendesignalen vom Basis-Anschluss (13) zum Mobilfunkantennen-Anschluss (19) als auch zur Übertragung von HF-Empfangssignalen vom Mobilfunkantennen-Anschluss (19) zum Basis-Anschluss (13) vorgesehen ist,
- es ist ferner eine Satelliten-Empfangsleitung (21, 21') vorgesehen, worüber die integriert vorgesehene Satelliten-Antenne (GPS-ANT) oder der Satelliten-Anschluss (115') mit zumindest einem Abschnitt der HF-Mobilfunk-Hauptstrecke (7; 107) gekoppelt ist,
- in dieser Satelliten-Empfangsleitung (21, 21') ist ein rauscharmer Satellitenempfangsverstärker (25) vorgesehen,
- die Einspeiseschaltung zur HF-Mobilfunk-Hauptstrecke (7; 107) umfasst eine Einrichtung zur Erzeugung einer Intermodulationsunterdrückung, die so aufgebaut ist,
a) dass am Ausgang des rauscharmen Satelliten-Empfangsverstärkers (25) eine Frequenz-Selektions-Einrichtung (28) zur Unterdrückung einer oder mehrerer Mobilfunkfrequenzen einer an dem mobilfunkantennenseitigen Anschluss (19) anschließbaren oder angeschlossenen Antenne (ANT) vorgesehen ist,
b) dass eine lose Ankopplung vom Ausgang der Frequenz-Selektions-Einrichtung (28) zur HF-Hauptstrecke (7; 107) mittels eines Richtkopplers (23) gegeben ist, und
c) dass eine Einspeisung eines über den rauscharmen Satellitenempfangsverstärker (25) verstärkten Satellitensignals über den Richtkoppler (23) mit einer Koppeldämpfung von mindestens 10 dB durchgeführt wird, wobei der Satellitenempfangsverstärker (25) eine Verstärkung von mindestens 6 dB mehr aufweist als die Koppeldämpfung des Richtkopplers (23).

2. GPS-Mastmodul nach Anspruch 1, **dadurch gekennzeichnet, dass** der Richtkoppler (23) eine Koppeldämpfung von mindestens 20 dB zur HF-Hauptstrecke (7; 107) aufweist.

3. GPS-Mastmodul nach Anspruch 1 oder 2, **dadurch gekennzeichnet, dass** der Satellitenempfangsverstärker (25) an seinem Eingang eine Frequenz-Selektions-Einrichtung (27) insbesondere zur Vermeidung einer Übersteuerung des Satellitenverstärkers (25) aufweist.

4. GPS-Mastmodul nach einem der Ansprüche 1 bis 3, **dadurch gekennzeichnet, dass** die Frequenz-Selektions-Einrichtung (28) aus einem Keramikfilter besteht oder einen Keramikfilter umfasst.

5. GPS-Mastmodul nach Anspruch 3 oder 4, **dadurch gekennzeichnet, dass** die Frequenz-Selektions-Einrichtung (27, 28) einen Bandpass, einen Tiefpass, einen Hochpass oder eine Bandsperre umfasst oder aus dieser besteht.

6. GPS-Mastmodul nach einem der Ansprüche 1 bis 5, **dadurch gekennzeichnet, dass** das eine Frequenz-Umsetzeinrichtung in der Satelliten-Empfangsleitung (21, 21') vorgesehen ist.

7. GPS-Mastmodul nach Anspruch 6, **dadurch gekennzeichnet, dass** die Frequenz-Umsetzeinrichtung einen Mischer (69) umfasst.

8. GPS-Mastmodul nach einem der Ansprüche 1 bis 7, **dadurch gekennzeichnet, dass** das GPS-Mastmodul (17; 17a, 17b) eine Bias-Tee- oder Diplexer-Schaltung (33) umfasst, die mit der HF-Mobilfunk-Hauptstrecke (7, 107) zur Durchführung einer Gleichstrom-Auskopplung und/oder Auskopplung von Niederfrequenz-Signalen angeschlossen ist.

9. GPS-Mastmodul nach einem der Ansprüche 1 bis 8, **dadurch gekennzeichnet, dass** das GPS-Mastmodul ferner eine Schnittstelle (58) aufweist, die über einen Signalbus (258) mit einer Auswerte- und/oder Kontrollelektronik (55) im GPS-Mastmodul verbunden ist.

10. GPS-Mastmodul nach einem der Ansprüche 1 bis 9, **dadurch gekennzeichnet, dass** in dem GPS-Mastmodul (17) in der HF-Hauptleitung/HF-Hauptstrecke (7; 107) zwischen einer basisstationseitigen und mobilfunkantennenseitigen Schnittstelle (13; 13a, 13b; 19; 19a, 19b) ein Trennkondensator (31) geschaltet ist, und dass
a) das Koppelnetzwerk zur Einspeisung des Satellitensignals bezogen auf den Trennkondensator (31) auf dem antennenseitigen Abschnitt der HF-Hauptstrecke (7; 107) und/oder
b) die Bias-Tee- oder Diplexer-Schaltung (33) bezogen auf den Trennkondensator (31) auf dem basisstationsseitigen Abschnitt der HF-Hauptleitung/HF-Hauptstrecke (7; 107)
angeschlossen ist.

11. GPS-Mastmodul nach Anspruch 9 oder 10, **dadurch gekennzeichnet, dass** die Auswerte- und/oder Kontrollelektronik (55) über eine zuschaltbare Steuerungsleitung (237) mit einer Gleichstrom-Versorgung- und/oder Steuerungsschaltung (59) zur Gleichstrom-Versorgung und Ansteuerung von Elektronik-Komponenten verbunden ist, die an der antennenseitigen Schnittstelle (19; 19a, 19b) anschließbar sind, wozu eine Leitungsverbindung zwischen der Auswerte- und/oder Kontrollelektronik (55) und einem entsprechenden Abschnitt der HF-Hauptstrecke (107; 107a, 107b) in dem GPS-Mastmodul (17; 17a, 17b) vorgesehen ist.

12. GPS-Mastmodul nach einem der Ansprüche 9 bis 11, **dadurch gekennzeichnet, dass** eine Gleichstrom-Versorgung über die weitere Schnittstelle (58) durchführbar ist.

13. Mobilfunkanlage mit zumindest einer Satelliten-Antenne (ANT) und einer Basisstation (BS), wobei zwischen der Basisstation (BS) und deren Satelliten-Antenne (ANT) eine HF-Hauptleitung/HF-Hauptstrecke (7; 107) zum Senden und/ oder Empfangen von Signalen vorgesehen ist, **dadurch gekennzeichnet, dass** in der HF-Hauptleitung/HF-Hauptstrecke (7; 107) ein GPS-Mastmodul (17) nach einem der Ansprüche 1 bis 12 geschaltet ist.

14. Mobilfunkanlage nach Anspruch 13, **dadurch gekennzeichnet, dass** an der Basisstation (BS) in der HF-Hauptleitung/ HF-Hauptstrecke (7; 107) ein Sperrfilter (205) insbesondere in Form eines Störbandfilters eingesetzt ist.

15. Mobilfunkanlage nach Anspruch 13 oder 14, **dadurch gekennzeichnet, dass** für jede Polarisation, in der die Mobilfunkantenne (ANT) sendet oder empfängt, ein separates GPS-Mastmodul (17; 17a, 17b) vorgesehen ist.

16. Mobilfunkanlage nach Anspruch 13 oder 14, **dadurch gekennzeichnet, dass** für zwei Polarisationen, in denen die Mobilfunkantenne (ANT) sendet und/oder empfängt, ein gemeinsames GPS-Mastmodul (17) vorgesehen ist.

17. Mobilfunkanlage nach einem der Ansprüche 13 bis 16, **dadurch gekennzeichnet, dass** zumindest ein GPS-Mastmodul (17) zwischen einer Mobilfunkantenne (ANT) und einem rauscharmen Empfangsverstärker (TMA) näher zur Mobilfunk-Antenneneinrichtung liegend und von der Basisstation (BS) entfernter liegend zwischengeschaltet ist.

18. Mobilfunkanlage nach einem der Ansprüche 13 bis 17, **dadurch gekennzeichnet, dass** zumindest ein GPS-Mastmodul (17) in der Mobilfunk-Antenneneinrichtung (ANT) vorzugsweise innerhalb eines Radoms vorgesehen ist.

19. Mobilfunkanlage nach einem der Ansprüche 13 bis 17, **dadurch gekennzeichnet, dass** zumindest ein GPS-Mastmodul (17) in einem Gerät zur Verstärkung der Empfangssignale (TMA) vorgesehen ist, der zwischen der Basisstation (BS) und der Mobilfunkantenne (ANT) bevorzugt in der Nähe der Antenne (ANT) geschaltet ist.

## Claims

1. GPS mast module for a base station or a remote radio head having the following features:
- comprising at least one integrated satellite antenna (GPS-ANT) and/or one satellite connection (115') for connecting a satellite antenna (GPS-ANT),
- the GPS mast module (17) comprises at least two connections (13, 19), namely a base connection (13) and a mobile communication antenna connection (19), between which a main HF mobile communication path (7, 107) is provided, both for transmitting HF transmission signals from the base connection (13) to the mobile communication antenna connection (19) and for transmitting HF receiving signals from the mobile communication antenna connection (19) to the base connection (13),
- a satellite receiving line (21, 21') is further provided, by means of which the integrated satellite antenna (GPS-ANT) or the satellite connection (115') is coupled to at least one portion of the main HF mobile communication path (7, 107),
- a low-noise satellite reception amplifier (25) is provided in this satellite receiving line (21, 21'),
- the supply circuit for the main HF mobile communication path (7; 107) comprises a device for generating an intermodulation suppression, which is configured in such a way that
a) a frequency selection means (28) for suppressing one or more mobile communication frequencies of an antenna (ANT) which is or can be connected to the mobile-communication-antenna-side connection (19) is provided at the output of the low-noise satellite reception amplifier (25),
b) a loose connection of the output of the frequency selection means (28) to the main HF path (7; 107) is provided by a hybrid coupler (23), and
c) a satellite signal which is amplified by the low-noise satellite reception amplifier (25) is supplied with a coupling attenuation of at least 10 dB by means of the hybrid coupler (23), wherein the satellite reception amplifier (25) has an amplification of at least 6 dB greater than the coupling attenuation of the hybrid coupler (23).

2. GPS mast module according to claim 1, **characterised in that** the hybrid coupler (23) has a coupling attenuation of at least 20 dB for the main HF path (7; 107).

3. GPS mast module according to either claim 1 or claim 2, **characterised in that** the satellite reception amplifier (25) comprises at the input thereof a frequency selection means (27) in particular for preventing an overload of the satellite amplifier (25).

4. GPS mast module according to any one of claims 1 to 3, **characterised in that** the frequency selection means (28) consists of a ceramic material filter or comprises a ceramic material filter.

5. GPS mast module according to either claim 3 or claim 4, **characterised in that** the frequency selection means (27, 28) comprises or consists of a band-pass, a low-pass, a high-pass or a band-stop.

6. GPS mast module according to any one of claims 1 to 5, **characterised in that** a frequency conversion means is provided in the satellite receiving line (21, 21').

7. GPS mast module according to claim 6, **characterised in that** the frequency conversion means comprises a mixer (69).

8. GPS mast module according to any one of claims 1 to 7, **characterised in that** the GPS mast module (17; 17a, 17b) comprises a bias tee or diplexer circuit (33) which is connected to the main HF mobile communication path (7; 107) for carrying out direct-current coupling-out or coupling-out of low-frequency signals.

9. GPS mast module according to any one of claims 1 to 8, **characterised in that** the GPS mast module further comprises an interface (58) which is connected via a signal bus (258) to an evaluation and/or control electronic circuit (55) in the GPS mast module.

10. GPS mast module according to any one of claims 1 to 9, **characterised in that** an isolating capacitor (31) is connected between a base-station-side and mobile-communication-antenna-side interface (13; 13a, 13b; 19; 19a, 19b) in the GPS mast module (17) in the main HF line/main HF path (7; 107), and **in that**
a) the coupling network is connected on the antenna-side portion of the main HF path (7; 107) for supplying the satellite signal in relation to the isolating capacitor (31) and/or
b) the bias tee or diplexer circuit (33) is connected to the base-station-side portion of the main HF line/main HF path (7; 107) based on the isolating capacitor (31).

11. GPS mast module according to either claim 9 or claim 10, **characterised in that** the evaluation and/or control electronic circuit (55) is connected via a control line (237), which can be switched on, to a direct-current supply and/or control circuit (59) for the direct-current supply and control of electronic components, which can be connected on the antenna-side interface (19; 19a, 19b), for which purpose a connecting line is provided between the evaluation and/or control electronic circuit (55) and a corresponding portion of the main HF path (107; 107a, 107b) in the GPS mast module (17; 17a, 17b).

12. GPS mast module according to any one of claims 9 to 11, **characterised in that** a direct-current supply can be provided via the further interface (58).

13. Mobile communication system comprising at least one satellite antenna (ANT) and one base station (BS), a main HF line/main HF path (7; 107) being provided between the base station (BS) and the satellite antenna (ANT) thereof for transmitting and/or receiving signals, **characterised in that** a GPS mast module (17) according to any one of claims 1 to 12 is connected in the main HF line/main HF path (7; 107).

14. Mobile communication system according to claim 13, **characterised in that** a band-stop filter (205), in particular in the form of an interference band filter, is used in the base station (BS) in the main HF line/main HF path (7; 107).

15. Mobile communication system according to either claim 13 or claim 14, **characterised in that** a separate GPS mast module (17; 17a, 17b) is provided for each polarisation in which the mobile communication antenna (ANT) transmits or receives.

16. Mobile communication system according to either claim 13 or claim 14, **characterised in that** a common GPS mast module (17) is provided for two polarisations in which the mobile communication antenna (ANT) transmits and/or receives.

17. Mobile communication system according to any one of claims 13 to 16, **characterised in that** at least one GPS mast module (17) is connected between a mobile communication antenna (ANT) and a low-noise reception amplifier (TMA), positioned closer to the mobile communication antenna device and further away from the base station (BS).

18. Mobile communication system according to any one of claims 13 to 17, **characterised in that** at least one GPS mast module (17) is provided in the mobile communication antenna device (ANT), preferably inside a radome.

19. Mobile communication system according to any one of claims 13 to 17, **characterised in that** at least one GPS mast module (17) is provided in a device for amplifying the receiving signals (TMA) which is connected between the base station (BS) and the mobile communication antenna (ANT), preferably in the vicinity of the antenna (ANT).

## Revendications

1. Module-mât GPS destiné à une station de base ou à une tête radio distante avec les caractéristiques suivantes :
- avec au moins une antenne satellite (GPS-ANT) intégrée et/ou une connexion satellite (115') destinée à raccorder une antenne satellite (GPS-ANT),
- le module-mât GPS (17) comprend au moins deux connexions (13, 19), à savoir une connexion de base (13) et une connexion pour antenne de téléphonie mobile (19), entre lesquelles une ligne principale de téléphonie mobile HF (7, 107) est prévue aussi bien pour transmettre des signaux d'émission HF depuis la connexion de base (13) vers la connexion pour antenne de téléphonie mobile (19) que pour transmettre des signaux de réception HF depuis la connexion pour antenne de téléphonie mobile (19) vers la connexion de base (13),
- une ligne de réception satellite (21, 21') est en outre prévue, sur laquelle l'antenne satellite (GPS-ANT) ou la connexion satellite (115') est couplée avec au moins une section de la ligne principale de téléphonie mobile HF (7 ; 107),
- un répéteur de réception satellite (25) à faible bruit est prévu dans cette ligne de réception satellite (21, 21'),
- le circuit d'alimentation vers la ligne principale de téléphonie mobile HF (7 ; 107) comprend un dispositif destiné à générer une suppression de l'intermodulation, lequel dispositif est conçu de sorte
a) qu'un dispositif de sélection de fréquence (28) est prévu à la sortie du répéteur de réception satellite (25) à faible bruit pour supprimer une ou plusieurs fréquences de téléphonie mobile d'une antenne (ANT) raccordée ou pouvant être raccordée au niveau d'une connexion (19) du côté de l'antenne de téléphonie mobile,
b) qu'un couplage amovible est transmis de la sortie du dispositif de sélection de fréquence (28) vers la ligne principale HF (7 ; 107) au moyen d'un coupleur directif (23), et
c) qu'une alimentation d'un signal satellite amplifié via le répéteur de réception satellite (25) est transmis via le coupleur directif (23) avec une atténuation de couplage d'au moins 10 dB, le répéteur de réception satellite (25) comportant une amplification d'au moins 6 dB de plus que l'atténuation de couplage du coupleur directif (23).

2. Module-mât GPS selon la revendication 1, **caractérisé en ce que** le coupleur directif (23) présente une atténuation de couplage d'au moins 20 dB par rapport à la ligne principale HF (7 ; 107).

3. Module-mât GPS selon la revendication 1 ou 2, **caractérisé en ce que** le répéteur de réception satellite (25) comporte un dispositif de sélection de fréquence (27) au niveau de son entrée, notamment pour éviter une surmodulation du répéteur de réception satellite (25).

4. Module-mât GPS selon l'une quelconque des revendications 1 à 3, **caractérisé en ce que** le dispositif de sélection de fréquence (28) est composé d'un filtre en céramique ou comprend un filtre en céramique.

5. Module-mât GPS selon la revendication 3 ou 4, **caractérisé en ce que** le dispositif de sélection de fréquence (27, 28) comprend un filtre passe-bande, un filtre passe-bas, un filtre passe-haut ou un filtre à suppression de bande ou se compose d'un tel filtre.

6. Module-mât GPS selon l'une quelconque des revendications 1 à 5, **caractérisé en ce qu'**un dispositif de changement de fréquence est prévu dans la ligne de réception satellite (21,21').

7. Module-mât GPS selon la revendication 6, **caractérisé en ce que** le dispositif de changement de fréquence comprend un mélangeur (69).

8. Module-mât GPS selon l'une quelconque des revendications 1 à 7, **caractérisé en ce que** le module-mât GPS (17 ; 17a, 17b) comprend un circuit de polarisation ou diplexeur (33), lequel est connecté à la ligne principale de téléphonie mobile HF (7, 107) afin d'établir un découplage du courant continu et/ou un découplage des signaux basse fréquence.

9. Module-mât GPS selon l'une quelconque des revendications 1 à 8, **caractérisé en ce que** le module-mât GPS comporte en outre une interface (58), laquelle est reliée via un bus de signal (258) à un dispositif électronique à impulsion et/ou de contrôle (55) dans le module-mât GPS.

10. Module-mât GPS selon l'une quelconque des revendications 1 à 9, **caractérisé en ce qu'**un condensateur de sécurité (31) est connecté entre une interface du côté de la station de base et une interface du côté de l'antenne de téléphonie mobile (13 ; 13a, 13b ; 19 ; 19a, 19b) dans le module-mât GPS (17) dans la ligne principale HF (7 ; 107), et **en ce que**
a) le réseau de couplage destiné à alimenter le signal satellite se rapportant au condensateur de sécurité (31) est relié à la section du côté de l'antenne de la ligne principale HF (7 ; 107) et/ou
b) le circuit de polarisation et/ou le diplexeur (33) se rapportant au condensateur de sécurité (31) est relié à la section du côté de la station de base de la ligne principale HF (7 ; 107).

11. Module-mât GPS selon la revendication 9 ou 10, **caractérisé en ce que** le dispositif électronique à impulsion et/ou de contrôle (55) est relié via un circuit de commande raccordable (237) à un circuit d'alimentation en courant continu et/ou à un circuit de commande (59) pour alimenter en courant continu et commander les composants électroniques, lesquels peuvent être connectés à l'interface du côté de l'antenne (19 ; 19a, 19b), une liaison câblée entre le dispositif électronique à impulsion et/ou de contrôle (55) et une section correspondante de la ligne principale HF (107 ; 107a, 107b) étant prévue dans le module-mât GPS (17 ; 17a, 17b).

12. Module-mât GPS selon l'une quelconque des revendications 9 à 11, **caractérisé en ce qu'**une alimentation en courant continu peut être établie via l'autre interface (58).

13. Dispositif de téléphonie mobile avec au moins une antenne satellite (ANT) et une station de base (BS), une ligne principale HF (7 ; 107) destinée à envoyer et/ou à recevoir des signaux est prévue entre la station de base (BS) et son antenne satellite (ANT), **caractérisé en ce qu'**un module-mât GPS (17) selon l'une quelconque des revendications 1 à 12 est raccordé à la ligne principale HF (7 ; 107).

14. Dispositif de téléphonie mobile selon la revendication 13, **caractérisé en ce qu'**un filtre suppresseur (205) est placé au niveau de la station de base (BS) dans la ligne principale HF (7 ; 107), notamment sous la forme d'un filtre passe-bande parasite.

15. Dispositif de téléphonie mobile selon la revendication 13 ou 14, **caractérisé en ce qu'**un module-mât GPS (17 ; 17a, 17b) distinct est prévu pour chaque polarisation dans laquelle l'antenne de téléphonie mobile (ANT) envoie ou reçoit des signaux.

16. Dispositif de téléphonie mobile selon la revendication 13 ou 14, **caractérisé en ce qu'**un module-mât GPS commun (17) est prévu pour deux polarisations dans lesquelles l'antenne de téléphonie mobile (ANT) envoie et/ou reçoit des signaux.

17. Dispositif de téléphonie mobile selon l'une quelconque des revendications 13 à 16, **caractérisé en ce qu'**au moins un module-mât GPS (17) est intercalé entre une antenne de téléphonie mobile (ANT) et un répéteur de réception (TMA) à faible bruit près du dispositif d'antenne de téléphonie mobile et à distance de la station de base (BS).

18. Dispositif de téléphonie mobile selon l'une quelconque des revendications 13 à 17, **caractérisé en ce qu'**au moins un module-mât GPS (17) est prévu dans le dispositif d'antenne de téléphonie mobile (ANT), de préférence à l'intérieur d'un radôme.

19. Dispositif de téléphonie mobile selon l'une quelconque des revendications 13 à 17, **caractérisé en ce qu'**au moins un module-mât GPS (17) est prévu dans un appareil pour amplifier les signaux de réception (TMA), lequel est relié entre la station de base (BS) et l'antenne de téléphonie mobile (ANT), de préférence à proximité de l'antenne (ANT).
